Europäisches Patentamt

European Patent Office

Office européen des brevets

(11) Numéro de publication: **0 099 154**
**B1**

(12) **FASCICULE DE BREVET EUROPEEN**

(45) Date de publication du fascicule du brevet: **28.01.87**

(51) Int. Cl.⁴: **G 03 B 9/34**

(21) Numéro de dépôt: **83201008.6**

(22) Date de dépôt: **06.07.83**

(54) **Obturateur photographique à rideaux.**

(30) Priorité: **09.07.82 FR 8212138**

(43) Date de publication de la demande:
**25.01.84 Bulletin 84/04**

(45) Mention de la délivrance du brevet:
**28.01.87 Bulletin 87/05**

(84) Etats contractants désignés:
**CH DE FR GB LI SE**

(56) Documents cités:
**FR-A- 376 012**
**FR-A-1 169 644**
**US-A-1 492 357**
**US-A-2 907 256**
**US-A-3 133 486**
**US-A-4 044 367**

(73) Titulaire: **SOCIETE D'OPTIQUE, DE MECANIQUE D'ELECTRICITE ET DE RADIO O.M.E.R.A. - S.E.G.I.D.**
**49, rue Ferdinand Berthoud**
**F-95101 Argenteuil (FR)**
(84) **FR**

(73) Titulaire: **N.V. Philips' Gloeilampenfabrieken**
**Groenewoudseweg 1**
**NL-5621 BA Eindhoven (NL)**
(84) **CH DE GB LI SE**

(72) Inventeur: **Lazzati, Jean Paul**
**SOCIETE CIVILE S.P.I.D. 209 rue de l'Université**
**F-75007 Paris (FR)**

(74) Mandataire: **Pyronnet, Jacques et al**
**Société Civile S.P.I.D. 209 rue de l'Université**
**F-75007 Paris (FR)**

EP 0 099 154 B1

Courier Press, Leamington Spa, England.

# Description

L'invention concerne un obturateur photographique à rideaux comportant un premier et un deuxième rideaux qui s'étendent selon des plans parallèles rapprochés, qui sont partiellement enroulés chacun sur au moins un rouleau d'entraînement situé d'un côté, respectivement de l'autre côté, de la fenêtre d'exposition et supporté à rotation par un châssis, et qui comportent chacun au moins un bord pouvant se déplacer au-dessus de la fenêtre d'exposition de façon telle qu'une fente d'exposition soit définie entre lesdits bords, le rouleau du premier rideau étant entraîné directement par un premier pignon solidaire en rotation d'un mécanisme moteur fixé audit châssis, ledit obturateur comportant en outre d'une part un deuxième pignon supporté à rotation par le châssis, opposé au premier pignon par rapport à la fenêtre d'exposition et lié en rotation à ce dernier, d'autre part un troisième pignon coaxial au deuxième pignon et entraîné à partir de ce dernier par l'intermédiaire d'un dispositif de calage angulaire indépendant du mouvement de rotation simultané des deuxième et troisième pignons, destiné à assurer le déplacement angulaire relatif des deuxième et troisième pignons de façon à modifier de manière correspondante la largeur de la fente d'exposition, ledit troisième pignon entraînant avec la même vitesse de rotation que le rouleau d'entraînement du premier rideau ledit rouleau d'entraînement dudit deuxième rideau, et en troisième lieu des moyens de tension qui maintiennent chaque rideau dans son plan respectif.

L'obturateur selon l'invention est un obturateur de type focal et peut s'appliquer à toutes sortes d'appareils photographiques, qu'il s'agisse d'appareils ordinaires du commerce ou d'appareils plus spécialisés, notamment ceux utilisés pour la surveillance aérienne ou maritime.

On connaît des obturateurs à deux rideaux, notamment de la demande de brevet français FR—A—2 439 413. L'obturateur décrit dans ce document d'art antérieur présente l'avantage d'obtenir, pour une loi de vitesse de défilement v(t) de chaque rideau invariable, une largeur de fente d et donc un temps de pose T réglables étant donnée la relation:

$$d = vT \qquad (1)$$

Ceci présente un progrès par rapport à certains appareils photographiques à rideau unique comportant une fente de largeur fixe et pour lesquels la variation du temps de pose s'obtient par remplacement du rifeau par un autre rideau ayant une largeur de fente différente, ou par rapport aux appareils photographiques classiques du commerce à rideau dans lesquels le rideau, qui ne comporte pas de fente, s'escamote et revient dans sa position d'obturation après un temps prédéterminé. Cette dernière façon de procéder ne permet pas d'obtenir une plage de réglage de temps de pose élevée, contrairement á l'utilisation d'obturateurs à deux rideaux. D'autre part, lorsqu'on utilise un obturateur à rideau(x) pour lequel une fente d'exposition défile devant la vue à impressionner et dont le temps de pose T est défini par l'équation (1) ci-dessus, on s'efforce de rendre les paramètres d et v constants en fonction du temps de façon à obtenir un temps de pose T constant pendant le mouvement de translation du (des) rideau(x). Ce but est difficile à atteindre lorsqu'on souhaite des vitesses v élevées étant données les phases d'accélération et de décélération nécessaires pour les pièces en mouvement de rotation ou de translation de l'obturateur. Une solution qui constitue un palliatif à ce problème technique consiste à rendre proportionnels en valeur instantanée par divers moyens connus, les paramètres d et v, c'est-à-dire à faire en sorte que lors du fonctionnement de l'obturatuer le relation suivante soit vérifiée:

$$d(t) = K \, v(t) \qquad (2)$$

K étant une constante en première approximation. Il est cependant difficile d'établir une telle relation avec précision. Notamment, l'obturatuer à deux rideaux de la demande de brevet français 2 439 413 présente des inconvénients: les mouvements des deux rideaux sont indépendants, la loi de vitesse v(t) de ces derniers, variable en fonction du temps, étant sensiblement la même. Il s'ensuit que pour une largeur de fente élevée, cette largeur de fente varie pendant le mouvement de translation de la fente, alors que la loi de variation est susceptible de se modifier et que les modifications peuvent être différentes pour l'un et l'autre rideau. D'autre part, pour de très faibles largeurs de fente de l'ordre de 1 à 2 mm, soit des temps de pose très brefs, la précision du système se dégrade étant donnée l'erreur relative élevée qui affecte alors la largeur d.

On connaît par ailleurs, du brevet des Etats-Unis d'Amérique US—A—1 492 357 un obturateur photographique à deux rideaux sensiblement conforme à Celui indiqué au premier paragraphe de la présente description et qui procure une liaison mécanique entre les rouleaux d'entraînement telle qu'il est possible d'établir à tout instant une position relative des rideaux apte à définir une fente d'exposition de largeur prédéterminée, les rideaux étant tendus en permanence. La largeur de fente peut ainsi avoir une valeur par exemple fixe ou suivre une loi de variation prédéterminée pendant le défilement des rideaux devant la vue à impressionner. Cependant aucune précision n'est fournie, dans ce document US, sur le mécanisme moteur d'entraînement de l'obturateur. Or il est avantageux de pouvoir commander le mouvement des rideaux dans les deux sens de rotation au moyen d'au moins un arbre à ressort que l'on peut bander dans les deux sens comme il est connu du brevet français FR—A—376 012. D'après ce dernier document, la mise sous tension du ressort moteur s'effectue par un mouvement de translation manuel et il n'y a pas de récupération d'énergie.

L'invention a essentiellement pour but de fournir un obturateur à fente d'exposition de largeur variable avec une bonne précision tout en permettant des vitesses de fonctionnement élevées et moyennant un apport d'énergie minimal.

Ce but est atteint et les inconvénients de l'art antérieur sont atténués ou supprimés grâce au fait que l'obturateur photographique selon l'invention, du type tel que défini au premier paragraphe de la présente description est remarquable en ce que ledit mécanisme moteur est constitué par un ressort hélicoïdal à spires non jointives qui peut être sollicité en torsion dans les deux sens de rotation, et qui fonctionne avec récupération d'énergie dans l'un ou l'autre sens de translations des rideaux du fait qu'il comporte une crémaillère supportée par des galets montés à rotation sur le châssis, engrenée sur lesdits premier et deuxième pignons et qui est munie d'une fente qui lui est sensiblement perpendiculaire et dans laquelle s'engage un maneton de commande monté excentré sur un pignon moteur à roue libre muni d'un cliquet antiretour, ledit pignon moteur apportant seulement un appoint d'énergie pour chaque prise de vue.

Selon un mode de réalisation préféré, lesdits moyens de tension sont constitués en ce qui concerne le premier rideau par un troisième rouleau d'entraînement supporté à rotation par le châssis, entraîné lui-même en rotation à partir dudit deuxième pignon, et ce qui concerne le deuxième rideau par un quatrième rouleau supporté à rotation par le châssis, proche dudit mécanisme moteur, entraîné par un ruban tendeur qui est enroulé autour des rouleaux support de deuxième rideau avec des sens d'enroulement opposés à ceux de deuxième rideau, et que lesdits premier et deuxième rideaux comportent chacun une ouverture rectangulaire pouvant découvrir entièrement le format et dont l'un des petits côtés constitue respectivement un bord de la fente d'exposition.

Selon un autre mode de réalisation préféré compatible avec le précédent, l'obturatuer est remarquable en ce que ledit dispositif de calage angulaire est constitué par l'association d'un premier et d'un deuxième tambour concentriques supportés à rotation par ledit châssis, d'une tige et d'au moins un doigt, lesdits tambours étant montés de façon concentrique et étant solidaires dudit deuxième pignon en ce qui concerne le premier tambour et dudit troisième pignon en ce qui concerne le deuxieme tambour, ladite tige s'étendant le long de l'axe desdits deuxième et troisième pignons à travers lesquels elle coulisse librement, ledit doigt étant monté à rotation sans possibilité de translation sur ladite tige à l'intérieur desdits tambours et étant engagé dans une première et une deuxième rampe pratiquées dans la paroi du premier et du deuxième tambour respectivement avec des courbes qui s'opposent, le calage angulaire entre lesdits deuxième et troisième pignons étant fonction de la position en translation de ladite tige sur son axe.

Un autre mode de réalisation préféré de l'invention compatible avec les précédents est remarquable en ce que ledit deuxième tambour est plus long que ledit premier tambour et que la rampe qu'il comporte s'étend, au-delà dudit premier tambour selon une génératrice du cylindre constitué par le tambour de façon telle que pour une plage de valeurs d'enfoncement élevées de ladite tige à l'intérieur des tambours ledit doigt soit dégagé de ladite première rampe de façon à désaccoupler les deux tambours.

Ce dernier mode de réalisation permet de réaliser des prises de vues en pose au moyen d'un seul parmi les deux rideaux, étant entendu qu'une fente d'exposition n'est alors plus définie et que le format reste découvert pendant toute la durée du temps de pose sélectionnée.

La description qui suit en regard des dessins annexés, le tout donné à titre d'exemple, fera bien comprendre comment l'invention peut être réalisée.

La figure 1 est une vue en perspective partiellement éclatée d'un mode de réalisation de l'obturateur défini au premier paragraphe de la présente description.

La figure 2 est une vue en perspective partiellement éclatée d'un mode de réalisation moyennement élaboré de l'obturateur selon l'invention.

La figure 3 est une vue en perspective partiellement éclatée d'un mode de réalisation élaboré de l'obturateur selon l'invention.

La figure 4 est un schéma explicatif de différentes phases de fonctionnement de l'obturateur élaboré selon la figure 3.

La figure 5 représente en coupe longitudinale le détail d'un dispositif de calage angulaire utilisé pour la mise en oeuvre de l'obturateur élaboré selon la figure 3.

Sur les différentes figures, les mêmes références désignent les mêmes éléments avec les mêmes fonctions.

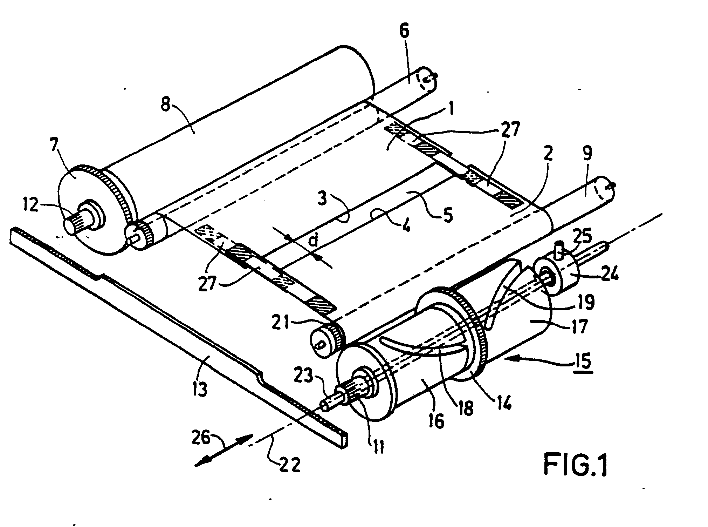

Sur les figures 1 à 3 le châssis qui supporte différentes pièces de l'obturateur n'a pas été représenté pour donner plus de clarté aux dessins.

L'obturateur de la figure 1 comporte un premier rideau 1 et un deuxième rideau 2 qui s'étendent sensiblement dans le même plan ou selon des plans parallèles rapprochés et qui comportent chacun un bord 3, respectivement 4, pouvant se déplacer au-dessus de la fenêtre d'exposition (non représentée) de façon telle qu'une fente d'exposition 5 de largeur d soit définie entre les bords 3 et 4. Chaque rideau est partiellement enroulé sur un rouleau d'entraînement, de part et d'autre de la fenêtre d'exposition, le rideau 1 autour d'un rouleau 6, entraîné directement par un premier pignon 7 lui-même entraîné en rotation par un mécanisme moteur 8 solidaire du châssis, et le rideau 2 autour d'un rouleau 9. Selon l'invention les deux rideaux sont mécaniquement liés en permanence, que l'obturateur soit au repos ou en fonctionnement, et il est possible à tout instant d'agir sur la largeur de fente 5, les rideaux 1 et 2 demeurant toujours tendus. Pour obtenir ce résultat, l'obturateur comporte en premier lieu un deuxième pignon 11 opposé au premier pignon 7 par rapport à la fenêtre d'exposition et lié en rotation à ce dernier par exemple au moyen d'un pignon 12 solidaire du pignon 7 et d'une crémaillère 13; l'obturateur comporte aussi un troisième pignon 14 coaxial au pignon 11 et entraîné à partir de ce dernier par l'intermédiaire d'un dispositif de celage angulaire 15 indépendant du mouvement de rotation simultané des pignons 11 et 14; l'obturateur comporte enfin des moyens de tension qui maintiennent chaque rideau tendu dans son plan.

De façon non représentée la crémaillère 13 peut se déplacer en translation sur des galets munis de gorges à fond plat et supportés à rotation par le châssis, ayant ses parties dentées d'extrémité engrenées sur les pignons 11 et 12. Le dispositif de calage angulaire 15 comporte deux tambours cylindriques, le tambour 16 solidaire du pignon 11 et le tambour 17 solidaire du pignon 14. Chaque tambour comporte à travers sa paroi une fente sous forme d'une rampe courbe 18, 19 par exemple hélicoïdale avec des courbures (des pas) inversées. Lors du montage de l'obturateur les tambours sont emboîtés, étant conçus pour pouvoir tourner librement l'un dans l'autre, par exemple à la façon d'un palier lisse ou au moyen de galets de roulement et le pignon 14 est alors en prise sur le pignon d'entraînement 21 du rouleau 9. Après montage, les pignons 11 et 14 ainsi que les tambours 16 et 17 ont le même axe géométrique 22. L'ensemble constitué par les éléments 11, 14, 16 et 17 est supporté par le châssis au moyen de deux paliers non représentés, un palier au niveau du pignon 11 et un palier à l'extrémité du tambour 17 opposée au pignon 14. L'axe qui porte le pignon 11 comporte un alésage qui permet le passage d'une tige 23, d'axe géométrique 22. La tige 23 est montée libre en translation et en rotation à l'intérieur des tambours et supporte à rotation sans possibilité de translation (par exemple au moyen d'un palier dont la bague intérieure est montée serrée sur la tige 23) une pièce 24, logée à l'intérieur des tambours et dont est solidaire au moins un doigt 25. Le doigt 25 est engagé dans les rampes 18 et 19. De préférence, le dispositif de calage angulaire décrit ci-dessus comporte deux autres rampes telles que 18 et 19 et un autre doigt tel que 25 disposés symétriquement à leur homologue par rapport à l'axe 22, afin d'équilibrer les contraintes mécaniques lors du fonctionnement du dispositif. On peut aussi prévoir 2 fois trois rampes ainsi que trois doigts, décalés de 120 degrés les unes (les uns) par rapport aux autres autour de l'axe 22.

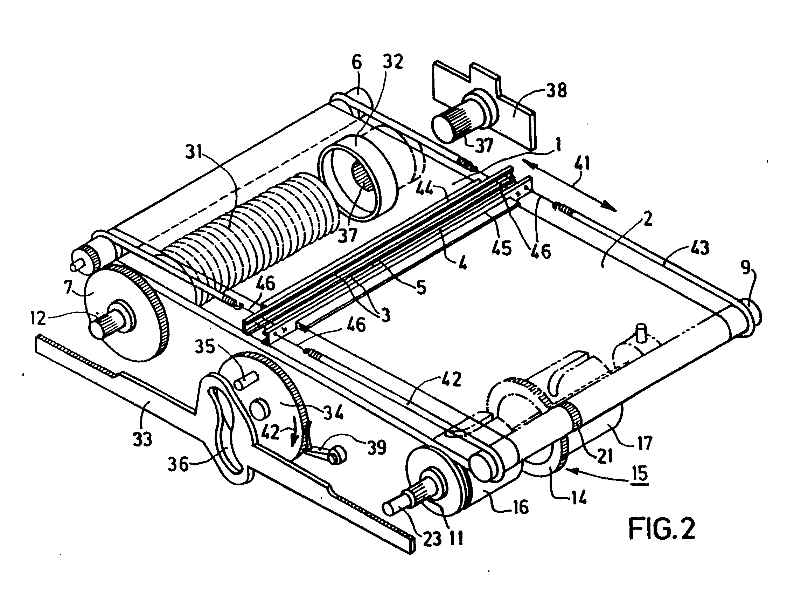

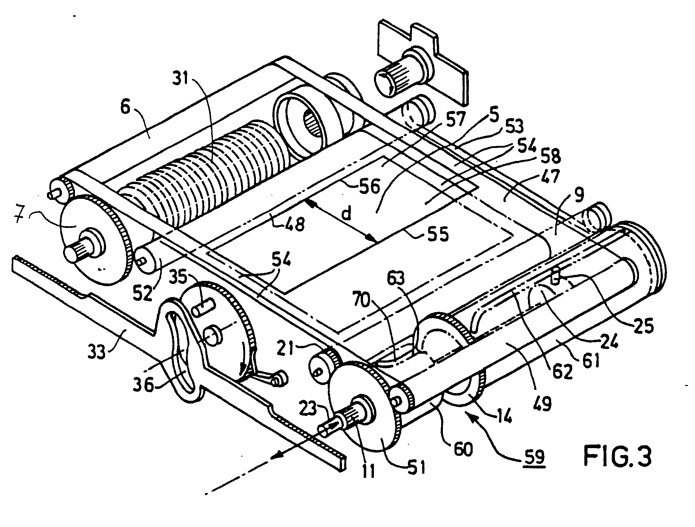

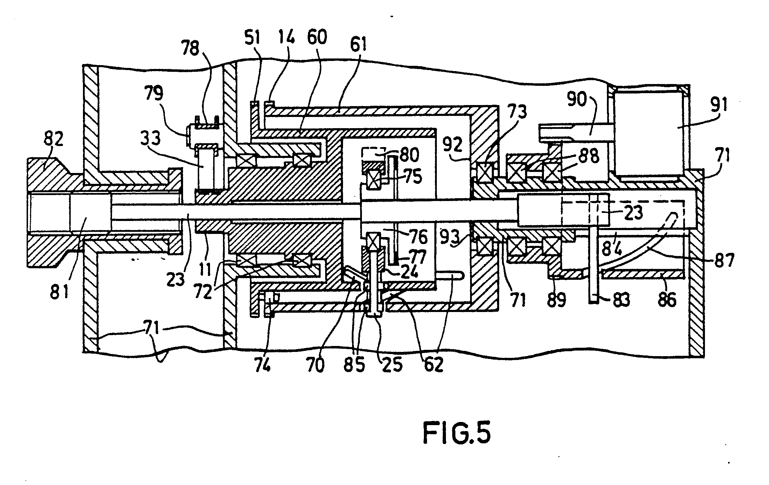

Lorsque les doigts tels que 25 sont engagés simultanément dans les rampes telles que 18 et 19, une variation en translation de la tige 23 provoque un décalage angulaire correspondant entre les pignons 11 et 14 étant donnée la coïncidence particulière qu'on établit ainsi entre des points respectifs situés dans un même plan perpendiculaire à l'axe 22 des rampes telles que 18 et 19 au moyen des doigts tels que 25, ce décalage angulaire ayant le même valeur prédéterminée, tant lorsque les pignons 11 et 14 rendus solidaires en rotation par les doigts 25 tournent que lorsqu'ils sont à l'arrêt c'est-à-dire pendant la prise de vue ou entre deux prises de vues. Soit x la variable qui représente l'élongation de la tige 23 le long de l'axe 22, on établit ainsi une fonction continue d(x) pour la largeur de fente, dont la courbe peut avoir toute forme souhaitée, indépendante du mouvement et de la position en translation des rideaux 1 et 2, étant entendu que les rapports de démultiplication entre le pignon moteur 7 et chacun des rouleaux d'entraînement 6 et 9 sont, par construction, choisis égaux. Un décalage en rotation entre les pignons 11 et 14 se traduit donc par une variation correspondante proportionnelle de la largeur d de la fente qui peut être ainsi rendue très fine. On notera, pour le fonctionnement du réglage de la fente décrit ci-dessus que, la largeur de la fente une fois réglée par la position en translation de la tige 23 symbolisée par la flèche double 26, l'axe 23 peut indifféremment, lors du fonctionnement de l'obturateur être entraîné en rotation (par frottemont à l'intérieur du pignon 11) ou être maintenu fixé par coulissement, sans rotation possible, à travers une partie du châssis, cette ambivalence du mouvement tenant au fait que la pièce 24 est montée à rotation autour de la tige 23. De préférence, la tige 23 est immobilisée en rotation à travers le châssis et sa position en translation (flèche 26) est obtenue au moyen d'un boulon monté à rotation sur le châssis, par exemple au moyen d'un palier, ce boulon étant vissé sur une extrémité de la tige 23 filetée à cet effet. Les moyens de manoeuvre de la tige 23 ne sont pas représentés sur la figure 1. Pour plus de détails sur la réalisation du dispositif de calage angulaire on peut se référer à la figure 5 et à la description qui s'y rapporte ci-dessous. Pour que les rideaux restent tendus et plans pour toutes les largeurs possibles de fente, des moyens de tension sont prévus. Sur la figure 1 ces moyens de tension sont constitués par des bandes 27 en matériau élastique mince disposées orthogonalement aux rouleaux 6 et 9 à proximité des bords des rideaux perpendiculaires aux bords 3 et 4 de la fente. Chacune des quatre bandes a ses extrémités solidarisées par tout moyen connu aux rideaux, l'une des extrémités étant très proche d'un bord de la fente et l'autre extrémité étant située en retrait par rapport au bord opposé de la fente contre l'autre rideau, ce qui permet un étirage assez grand des bandes élastiques pour toutes les largeurs de fente souhaitées. Les bandes sont associées deux par deux en superposition de part et d'autre des rideaux, par exemple symétriquement par rapport à l'axe géométrique qui marque le milieu de la fente de la façon représentée sur la figure. Le mécanisme moteur 8 est par exemple constitué par un moteur électrique à commande électronique fixé au châssis permettant d'obtenir les caractéristiques de vitesse ainsi que les séquences souhaitées pour le fonctionnement de l'obturateur, ce fonctionnement pouvant être effectué pour l'un ou l'autre sens de déplacement de la fente 5 devant la fenêtre d'exposition. Le mécanisme moteur peut aussi être constitué par un ressort hélicoïdal, de préférence à spires non jointives comme représenté aux figures 2 et 3, ce qui permet des couples et donc des vitesses élevées pour les pièces mobiles de l'obturateur. Dans ce dernier cas il faut prévoir un mécanisme d'apport d'énergie et de séquencement, en relation avec le mécanisme d'entraînement par exemple tel que décrit ci-dessous en référence aux figures 2 et 3. On notera que les rouleaux d'entraînement 6 et 9 entraînent de façon positive les rideaux 1 et 2 dans les deux sens de rotation, si bien que les moyens de tension tels que les bandes 27 sur la figure 1 ne doivent vaincre que l'inertie des rideaux, par ailleurs négligeable devant celle des pièces en rotation notamment, lors de la phase d'accélération ou de décélération qui se produit pour chaque déclenchement de l'obturateur.

La figure 2 représente un mode de réalisation de l'obturateur selon l'invention dans lequel le mécanisme moteur est un ressort hélicoïdal à spires non jointives 31, associé à un mécanisme d'apport (d'appoint) d'énergie et de séquencement (de déclenchement) et dans lequel les moyens de tension des rideaux sont différents des bandes élastiques 27 de la figure 1. Sur la figure 2, le dispositif de calage angulaire est semblable à celui de la figure 1 et fonctionne de la même façon, le pignon d'entraînement 21 du rouleau 9 étant symboliquement représenté en regard du pignon 14 à cause de la représentation en vue éclatée du dispositif de calage angulaire. Le ressort moteur 31 est fixé à l'une de ses extrémités à un carter d'ancrage 32 et à l'autre extrémité au pignon moteur 7. Une crémaillère 33 et entraînée tantôt par le pignon 12, tantôt par un pignon 34 solidaire d'un moteur électrique non représenté, par l'intermédiaire d'un maneton de commande excentré 35 qui pénètre avec un léger jeu dans une fente 36 pratiquée dans la crémaillère 33 et qui s'étend dans une direction sensiblement perpendiculaire à cette dernière. Le carter 32, solidaire d'une extrémité du ressort, est monté au moyen de cannelures 37 sur pièce d'équilibrage du ressort 38, solidaire du châssis. De façon non représentée les rouleaux 6 et 9 et les pignons 12, 11 et 14 sont supportés par des paliers montés sur le châssis, comme à la figure 1, de même que le pignon 34 qui comporte un cliquet anti-retour 39. La crémaillère 33, se déplace en translation sur des galets non représentés comportant une gorge à fond plat pour son guidage, étant d'un côté en contact permanent avec lesdits galets et engrenée du côté opposé sur les pignons 11 et 12.

L'obturateur fonctionne dans les deux sens indiqués par la flèche double 41, avec récupération d'énergie, comme expliqué ci-après. La force exercée par le ressort pour une position déterminée de l'ensemble constitué par les rideaux et la fente qui les sépare est réglée au moyen de la pièce d'équilibrage du ressort, notamment de façon que, lorsque le maneton 35 se trouve à une extrémité de la fente 36, la crémaillère 33 se trouvant sensiblement dans sa position médiane, le ressort moteur soit au repos. Le ressort 31, à spires non jointives peut être chargé dans les deux sens, c'est-à-dire dans le sens d'une dilatation des spires (qui s'accompagne d'un léger allongement) ou dans le sens d'une contraction des spires (accompagnée d'un léger raccourcissement). La variation de longueur du ressort est rendue possible au moyens des cannelures 37. Le maneton 35 étant par exemple dans sa position haute, le pignon 34 est entraîné en rotation dans le sens de la flèche 42 jusqu'à ce que le maneton soit situé au milieu de la fente 36. A cet instant le ressort est bandé au maximum, la crémaillère se situe à son élongation extrême du côté droit, sur la figure, et la fente 5 se trouve aussi complètement à droite, en dehors du format de l'appareil. Dès que ce point extrême du maneton est passé, c'est le pignon 7 qui devient moteur sous l'action du ressort, une roue libre étant prévue par exemple pour le pignon 34 dans le sens de la flèche 42. Pendant ce mouvement très rapide de toutes les pièces mobiles, la fente balaye la vue à exposer et dépasse le format dans l'autre sens étant donnée l'inertie de toutes les pièces en mouvement qui crée un bandage partiel du ressort en sens opposé au sens indiqué plus haut. Ce bandage du ressort n'est que partiel à cause des pertes d'énergie par frottement. Le retour (oscillatoire) du système mobile à la position de repos (ressort non chargé) est rendu impossible au moyen du cliquet anti-retour 39. Le moteur électrique qui entraîne en rotation le pignon 34 peut être arrêté au cours du mouvement rapide du rideau. Il peut aussi fonctionner en permanence, sa vitesse de rotation déterminant alors la cadence des prises de vues, les vues successives étant balayées en alternance dans un sens puis dans l'autre par la fente d'exposition. En variante préférée, le pignon 34 peut être supporté par un palier solidaire du châssis et le moteur électrique qui ne lui est pas accouplé comporte un arbre muni d'une came qui, à chaque demi-tour du pignon 34 appuie contre le maneton de commande 35 jusqu'à lui faire passer sa position extrême dans le sens latéral. Cette variante est préférée du fait qu'un temps mort est respecté entre deux mouvements successifs du rideau, pendant lequel le moteur n'est pas sollicité par le mécanisme de l'obturateur, ce qui lui permet d'accomplir d'autres tâches telles que le passage de la pellicule à la vue suivante devant la fenêtre d'exposition. On obtient ainsi un dispositif à fonctionnement symétrique, tel que la plus grande partie de l'énergie libérée par le ressort soit récupérée par le ressort lui-même et pour lequel seul un léger appoint d'énergie apporté par le moteur électrique est nécessaire pour porter le ressort à sa tension maximum. Les principaux avantages de ce mode d'entraînement des rideaux sont: l'obtention d'une grande vitesse de défilement des rideaux, de l'ordre de quelques mètres par seconde, une consommation d'énergie faible et pour chaque prise de vue, une plage de vitesse sensiblement constante lors du passage de la fente au-dessus du format de l'appareil.

Sur la figure 2, les moyens de tension sont constitués par deux courroies élastiques 42 et 43 de préférence rondes, qui entourent les rouleaux 6 et 9 dans des gorges prévues à cet effet en se refermant sur elles-mêmes et dont les extrémités sont fixées aux bords 3 et 4 de la fente 5 de façon à tirer ces derniers l'un vers l'autre. Pour obtenir une bonne rigidité des bords de la fente et un ancrage solide, ces bords sont matérialisés par des pièces métalliques 44 et 45 (des profilés par exemple) dans lesquelles sont pincés et fixés les bords des rideaux (non visibles sur la figure 2). De préférence, les pièces métalliques 44 et 45 dépassent les rideaux de part et d'autre de façon à constituer des extrémités libres dans lesquelles est réalisé l'ancrage des courroies 42 et 43 qui sont de préférence constituées par des ressorts hélicoïdaux de faible diamètre. Chaque ressort comporte à son extrémité un câble ou une ficelle 46 qui traverse l'une des pièces métalliques et qui est fixé(e) à l'autre pièce métallique. Pour éviter un couple de renversement des pièces métalliques 44 et 45, ce qui nuirait à la précision sur la largeur de fente d, les ficelles 46 s'étendent autant que possible dans le plan des rideaux 1 et 2. On notera que, dans le mode de réalisation de la figure 2, l'écartement entre les rouleaux d'entraînement 6 et 9 est plus grand que dans le mode de réalisation de la figure 1. Cela tient au fait que les moyens de tension des rideaux, sur la figure 2, ne peuvent pas s'enrouler autour des rouleaux 6 et 9 contrairement au cas de la figure 1; or il faut qu'après chaque prise de vue, la fente d'exposition soit occultée ou pour le moins se situe nettement en dehors du format pour éviter de voiler le film. Le disposition éloignée des rouleaux, sur la figure 2 garantit le film contre toute entrée de lumière indésirable à travers la fente d'exposition 5.

Le mode de réalisation de la figure 3 comporte le même mécanisme moteur et le même mécanisme d'appoint d'énergie et de déclenchement que le mode de réalisation de la figure 2. Par contre, les moyens de tension des rideaux et le dispositif de calage angulaire sont différents de ceux représentés aux figures 1 et 2. Dans ce cas les rideaux ne sont pas juxtaposés mais superposés de façon que l'on peut définir un premier rideau dit supérieur 47 et un deuxième rideau dit inférieur 48, disposé parallèlement à 1 mm de distance environ u-dessous du rideau supérieur sur la figure. Chaque rideau est maintenu tendu dans sont plan grâce au fait qu'il est supporté et entraîné par deux rouleaux diposés de part et d'autre du format, ce qui constitue les moyens de tension: le premier rideau 47 est entraîné par le rouleau 6 et par un troisième rouleau 49 supporté à rotation par le châssis et entraîné lui-même à rotation à partir du deuxième pignon 11 par l'intermédiaire d'un pignon 51 solidaire en rotation du pignon 11, et le deuxième rideau 48 est entraîné par le deuxième rouleau 9 et par un quatrième rouleau 52 supporté à rotation par le châsis, proche du mécanisme moteur, et entraîné lui-même en rotation par un ruban tendeur 53 qui est enroulé autour des deuxième et quatrième rouleaux support du deuxième rideau 48 avec des sens d'enroulement opposés à ceux du rideau 48. Les rouleaux 48 et 52 ont, en foctionnement, la même vitesse périphérique que les rouleaux 6 et 9. Dans ce mode de réalisation, les premier et deuxième rideaux comportent chacun une ouverture 57, respectivement 58 sous forme de fenêtres rectangulaires de même hauteur, pouvant l'une et l'autre découvrir entièrement le format et dont l'un des petits côtés 55, 56 constitue respectivement un bord de la fente d'exposition. Cette disposition fait que chaque rideau est constitué par deux demi-rideaux reliés entre eux par des bretelles 54. Comme dans les modes de réalisation des figures 1 et 2, les rideaux 47 et 48 de la figure 3 sont de préférence en inox ou en titane, d'une épaisseur de l'ordre de 35 micromètres. Leur rigidité est telle qu'ils font ressort autour des rouleaux qui les portent (à capacité inégale des rouleaux 6 et 49 ou 9 et 52 notamment) ce qui permet d'avoir des rideaux toujours tendus même avec une variation du diamètre des rouleaux due à la charge des rideaux qui les entourent. On notera, sur la figure 3, que les bords 55 et 56 de la fente d'obturation ont été inversés par rapport à ceux des figures 1 et 2, le bord 55 qui appartient au premier rideau 47 étant situé du côté du dispositif de calage angulaire et le bord 56 qui appartient au deuxième rideau 48 étant du côté du mécanisme moteur. Cette inversion est rendue possible ici, du fait que chaque rideau comporte une ouverture.

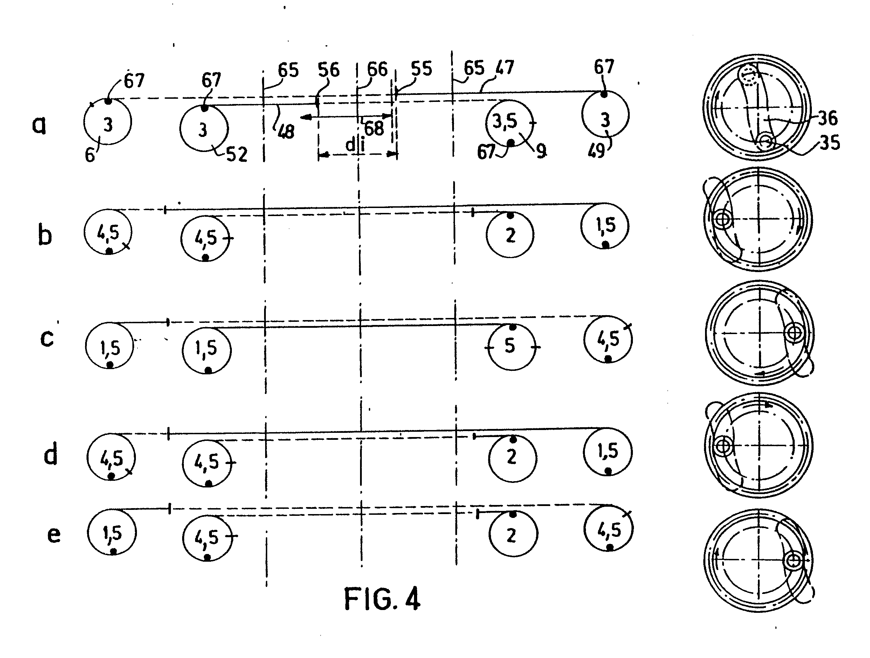

Le dispositif de calage angulaire référencé 59 sur la figure 3 peut être le même que sur les figures 1 et 2. Cependant la réalisation plus élaborée des rideaux, de leur mode d'entraînement et de leurs moyens de tension décrite ci-dessus permet une réalisation plus élaborée du dispositif de calage angulaire qui rend possible la photographie en pose, moyennant un réglage approprié. Dans le dispositif 59, le premier tambour 60 supporte, en plus du pignon 11, le pignon 51 et comporte une (des) rampe(s) 70. D'autre part, le deuxième tambour, référencé 61, est plus long que le tambour 60 et la (les) rampe(s) 62 qu'il comporte pour le guidage du (des) doigt(s) 25 se prlonge, vers l'arrière sur la figure, selon une génératrice du cylindre 61. Il est ainsi possible de débrayer le rideau inférieur 48, ce qui se produit lorsque les doigts 25 se dégagent des rampes 70. Pour armer l'obturateur en position pose, on fait en sorte que, les tambours 60 et 61 étant encore solidaires par l'intermédiaire des doigts 25, la fente d'obturation soit placée le plus près possible du mécanisme moteur, de façon telle que l'ouverture 57 du rideau inférieur découvre entièrement le format et que le partie pleine du rideau supérieur couvre entièrement ce dernier. Dans cette position particulière dans laquelle le maneton 35 se situe sensiblement à sa position extrême vers la gauche, sur la figure, les doigts 25 sont débrayés du tambour 60 par enfoncement de la tige 23. Pour maintenir dans cette dernière position le rideau 48 avec un bon calage qui soit insensible aux chocs ou aux vibrations, le pièce 24 est poussée à fond, au moyen de la tige 23, avec effet de pression contre la bague intérieure, solidaire du châssis et donc immobile du palier support du tambour 61. L'obturateur peut alors fonctionner pour effectuer des prises de vues avec un temps de pose illimité au moyen du seul rideau supérieur 47. Ce mode de fonctionnement s'apparente à celui des appareils classiques du commerce à un seul rideau obturateur. Dans ce mode de fonctionnement particulier, un cycle complet du mécanisme d'entraînement est nécessaire (c'est-à-dire un tour complet du pignon 34) et il faut donc prévoir que l'avancement du film pour passer d'une vue à la suivante n'ait lieu qu'une fois et non pas deux au cours de ce cycle: avant la prise de vue en pose, le rideau supérieur recouvre entièrement le format (rideau 47 tiré complètement vers la gauche-voir figure 4d). Le début du temps de pose s'obtient par déclenchement de l'obturateur à l'aide du moteur électrique et traction du rideau supérieur vers la droite puis arrêt du moteur électrique (dans cette dernière position le format est entièrement dégagé-voir figure 4e). Après une temporisation électronique de valeur prédéterminée qui constitue le temps de pose, le moteur est à nouveau actionné et le rideau 47 repasse en sens inverse au-dessus du format, pour se retrouver à sa position initiale coïncidant avec un deuxième arrêt du moteur (voir figure 4d), jusqu'à la prise de vue suivante. A partir de la position de la figure 4d, le passage à la position de prise de vue en instantané a lieu par traction sur l'axe 23 qui rend à nouveau solidaire les tambours 60 et 61. Pour faciliter à cette occasion l'introduction des doigts 25 dans les rampes 70, ces dernières comportent de préférence, à leur extrémité ouverte un évasement 63 (figure 3).

Comme décrit plus en détail ci-dessous en référence à la figure 5, on peut prévoir que la tige 23 traverse en son centre avec oulissement le palier support du tambour 61 et actionne, au-de-là de ce palier, au moyen d'un mécanisme qui s'apparente au dispositif 59, un potentiomètre dont la tension de sortie V est représentative de la dimension d (respectivement du temps de pose T).

La figure 4 représente en a, b, c, d et e différentes phases de fonctionnement possibles pour le mode de réalisation de la figure 3, le fonctionnement illustré par la figure 4a, 4b ou 4c étant aussi possible pour les modes de réalisation des figures 1 et 2 avec un seul rouleau d'entraînement par rideau (6, respectivement 9). On a représenté à droite des figures la position correspondante du maneton de commande 35 dans la fente 36. Le format de l'appareil est indiqué par les deux traits mixtes 65, le milieu du format étant indiqué par le trait mixte 66. On a représenté de part et d'autre du format les rouleaux d'entraînement des rideaux, 6 et 49 d'une part et 9 et 52 d'autre part. La ligne d'ancrage des rideaux sur les rouleaux est symbolisée par un point 67 contre le cercle qui représente chaque rouleau et moyennant un choix d'origine pour l'ancrage des rideaux sur les rouleaux, choix par ailleurs arbitraire dans la mesure où un enroulement minimum suffisant est respecté autour de chaque rouleau, le chiffre marqué à l'intérieur de chaque cercle indique le nombre de tours effectué par les rideaux autour des rouleaux. Sur la figure 4a, une flèche double 68 indique la plage de réglage possible pour la largeur d de la fente d'exposition qui peut varier par exemple entre d min = 1,75 mm (T = 1/3200 s) et d max = 22,4 mm (T = 1/250 s). Sur la figure 4a on a choisi une valeur intermédiaire di pour la largeur de fente d. La figure 4a représente la position de l'obturateur, ressort moteur 31 non chargé, le maneton 35 se situant à l'une des extrémités de la fente 36. La figure 4b représente, pour la même largeur de fente di, le système tiré vers la gauche sous l'action du maneton 35 qui se trouve à sa position extrême vers la gauche, prêt au déclenchement. Entre les positions des figures 4b et 4c, l'obturateur a fonctionné, la fente d'exposition 5 balayant le format de la gauche vers la droite à une vitesse élevée sensiblement constante, la fente d'exposition s'est immobilisée un court instant sur la droite en dehors du format pendant lequel le changement de vue s'est effectué puis a repris son déplacement vers la droite, sous l'action du moteur électrique et du maneton 35, jusqu'à atteindre la position représentée par la figure 4c. La prise de vue suivante correspond au passage de la position 4c à la position 4b selon un fonctionnement en sens inverse symétrique du précédent. Les figures 4d et 4e illustrent une prise de vue en pose. La position de départ dans laquelle s'effectue le débrayage du tambour 61 est indiquée à la figure 4e, cette position étant d'ailleurs la même que celle de la figure 4b. Le passage de la position 4d à la position 4e s'effectue, pour le rideau supérieur 47 comme décrit ci-dessus pour le passage de 4b à 4c. Pendant cette transition, le rideau inférieur 48 reste immobile de façon que, dans la position 4e, le format soit entièrement découvert. A la fin de la prise de vue, dans la position 4e le moteur électrqiue est à nouveau actionné et les rideaux 47 et 48 reviennent dans leur position 4d (respectivement 4b si la tige 23 a été tirée).

La figure 5 montre comment peut êre réalisé le dispositif de calage angulaire 59 de la figure 3. Pour ne pas surcharger la figure, certaines pièces sont représentées comme une pièce unique alors qu'en pratique elles sont constituées de plusieurs pièces séparées, ce qui est nécessaire pour permettre le montage, les pièces séparées étant solidarisées après montage par tout moyen connu. Il s'agit notamment des pièces support de paliers. Le châssis est référencé 71 et les différentes pièces référencées sur la figure 3 sont identifiables, à savoir le deuxième pignon 11, le troisième pignon 14, les tambours 60 et 61 avec leurs rampes 70 et 62 respectivement, la tige 23, la pièce 24 supportant le (les) doigt(s) 25, la crémaillère 33 et le pignon 51. Le tambour 60 est monté à rotation sur le châssis au moyen d'un palier 72, et du côté opposé, le tambour 61 au moyen d'un palier 73. Le tambour 61 peut tourner autour du tambour 60 grâce à au moins trois galets 74 dont les axes sont supportés par le tambour 60. La pièce 24 tourne par l'intermédiaire d'un palier 75, autour d'une pièce 76 montée serrée sur la tige 23 et qui est solidaire d'un plateau de freinage 77. Une extrémité dentée de la crémaillère 33 et emprisonnée entre le pignon 11 et un galet avec gorge à fond plat 78 supporté à rotation autour d'un axe 79 solidaire du châssis. Une extrémité 81 de la tige 23 est filetée et se visse dans un boulon 82 qui est supporté par le châssis au moyen d'un palier lisse; cet agencement permet, en faisant tourner le boulon 82, de faire avancer ou reculer la tige 23 et donc l'ensemble constitué par les éléments 24, 25, 75, 76, 77 à l'intérieur des tambours 60 et 61, moyennant que la tige 23 soit immobilisée en rotation. Cette immobilisation en rotation est réalisée au moyen d'un doigt 83 fixé perpendiculairement à l'autre extrémité de la tige 23 et engagé dans une fente rectiligne 84 pratiquée dans le châssis. Pour obtenir un coulissement assez rapide de la tige 23 on peut prévoir de munir l'extrémité filetée 81 d'un filet multiple. Le boulon 82 peut être manoeuvré à la main ou à partir d'un moteur électrqiue à commande électronique. Il est même possible de faire varier la largeur de fente d selon toute loi de variation en fonction du temps désirée pendant la phase de déclenchement de l'obturateur. Notamment, pendant l'intervalle de temps durant lequel la fente passe au-dessus de la vue à impressionner, sa vitesse v(t) n'est pas tout à fait constante mais, surtout dans le cas où le mécanisme moteur est un ressort, croissante du début au milieu de cet intervalle puis décroissante du milieu à la fin, en suivant une loi qui peut être déterminée de façon assez précise expérimentalement. Il est ainsi possible, selon l'invention, d'imposer à la dimension d une variation d(t), pendant ledit intervalle de temps, par exemple proportionnelle à la variation v(t) (mêmes fonctions du temps-voir formule 2) de façon que l'on ait, en vertu de la formule (1) une valeur du temps de pose T constante prédéterminée pendant tout le temps de passage de la fente au-dessus de la vue (la fente s'élargit lorsqu'elle passe l'axe médian 66 du format-figure 4).

Sur la figure 5, un rectangle en trait interrompu 80 symbolise la présence d'autres doigts 25 coopérant avec d'autres fentes 70, 62 pratiquées dans les tambours 60 et 61. De préférence, les doigts 25 comportent des bagues rotatives 85 destinées à faciliter leur mouvement à travers les rampes. Lorsque les doigts 25 se dégagent de la rampe 70 par enfoncement de la tige 23, le tambour 61 n'est plus solidaire du tambour 60. Un léger enfoncement supplémentaire met le disque de freinage 77 en contact avec le fond 92 du tambour 61, ce qui immobilise ce dernier puisque le disque 77 est lui-même immobile en rotation grâce au doigt 83. On notera qu'en variante, comme décrit ci-dessus en référence à la figure 3, le disque de freinage pourrait être solidaire de la pièce 24 et appuyer contre la face 93 du châssis qui s'étend sensiblement dans le plan de la surface 92.

De façon non représentée, l'enfoncement maximal de la tige 23 agit mécaniquement sur une commande mécanique ou électromécanique dont la fonction est d'inhiber une séquence d'avancement du film sur deux au cours d'un cycle complet de fonctionnement du mècanisme d'entraînement, ce qui évite, lors de prises de vues en pose, de gâcher la moitié de la surface photosensible du film à impressionner.

On a représenté à droite de la figure 5, au-delà du palier 73, un mécanisme, commandé par la position en translation de la tige 23, et permettant de traduire sous la forme d'une gradeur électrique la valeur instantanée de la largeur de fente d. Ce mécanisme est constitué par un secteur de cylindre 86 muni d'une rampe courbe 87 et supporté à rotation par le châssis au moyen de paliers 88. Le doigt 83 traverse la rampe 87 et le secteur 86 est muni d'un pignon 89 qui est engrené sur l'axe 90 d'un potentiomètre 91. Le mouvement en translation du doigt 83 provoque la rotation de l'axe 90 selon une loi définie par la courbure de la rampe 87. V étant la tension de sortie du potentiomètre 91, il est ainsi possible d'établir la fonction de transfert nécessaire entre les paramètres d et V ou T et V. Le signal de sortie du potentiomètre (la tension V) peut être utilisé d'une part pour l'indication de la valeur du temps de pose à destination d'un affichage visualisé et/ou d'un enregistrement, d'autre part comme capteur de sortie d'asservissement de l'illumination du film fonctionnant en liaison avec une commande de diaphragme soit à temps de pose imposé soit à temps de pose variable seul ou simultanément avec le diaphragme.

Les principaux avantages de l'obturateur décrit ci-dessus sont les suivants:

— fonctionnement dans l'un ou l'autre sens de balayage, en alternance, ce qui permet une cadence de prise de vues rapide (jusqu'à dix vues par seconde);

— dans le cas où le mécanisme moteur est un ressort, récupération d'énergie, ce qui économise l'énergie du moteur de déclenchement (à l'aide d'un ressort unique);

— maîtrise totale de la largeur de fente, aussi bien à l'arrêt que pendant le fonctionnement, ce qui permet d'obtenir des fentes extrêmement fines (jusqu'à 1 mm) et donc des temps de pose très brefs (temps de pose variable et précis allant jusqu'à 1/4000 s);

— variation de la largeur de fente possible pendant le déplacement des rideaux;

— possibilité, dans le mode de réalisation à quatre rouleaux d'entraînement des rideaux, moyennant un réglage simple (même bouton de commande que pour la largeur de fente) de photographier en pose (photo de nuit avec fusée éclairante);

— pas ou peu de contraintes dans un sens radial (comme cela existe sur certains appareils) sur les rouleaux des rideaux ce qui permet de réaliser ces derniers en alliages légers et d'obtenir une faible inertie de rotation des rouleaux avantageuse pour le gain en vitesse et l'économie d'énergie.

## Revendications

1. Obturateur photographique à rideaux comportant un premier et un deuxième rideaux (1, 2; 47, 48) qui s'étendent selon des plans parallèles rapprochés, qui sont partiellement enroulés chacun sur au moins un rouleau d'entraînement.(6, 9) situé d'un côté, respectivement de l'autre côté, de la fenêtre d'exposition et supporté à rotation par un châssis (71), et qui comportent chacun au moins un bord (3, 4; 44, 45; 55, 56) pouvant se déplacer au-dessus de la fenêtre d'exposition de façon telle qu'une fente d'exposition (5) soit définie entre lesdits bords, le rouleau (6) du premier rideau (1; 47) étant entraîné directement par un premier pignon (7) solidaire en rotation d'un mécanisme moteur (37) fixé audit châssis, ledit obturateur comportant en outre, d'une part un deuxième pignon (11) supporté à rotation par ledit châssis, opposé au premier pignon (7) par rapport à la fenêtre d'exposition et lié en rotation à ce dernier, d'autre part un troisième pignon (14) coaxial au deuxième pignon (11) et entraîné à partir de ce dernier par l'intermédiaire d'un dispositif de calage angulaire (15; 59) indépendant du mouvement de rotation simultané des deuxième et troisième pignons, destiné à assurer le déplacement angulaire relatif des deuxième et troisième pignons de façon à modifier de manière correspondante la largeur de la fente d'exposition, ledit troisième pignon (14) entraînant avec la même vitesse de rotation que le rouleau d'entraînement (6) du premier rideau (1; 47) ledit rouleau d'entraînement (9) dudit deuxième rideau (2; 48), et en troisième lieu des moyens de tension (27; 42, 43, 46; 48, 49) qui maintiennent chaque rideau dans son plan respectif, ledit mécanisme moteur.étant constitué par un ressort hélicoïdal (31) à spires non jointives qui peut être sollicité en torsion dans les deux sens de rotation, et qui fonctionne avec récupération d'énergie dans l'un ou l'autre sens de translation des rideaux du fait qu'il comporte une crémaillère (33) supportée par des galets montés à rotation sur le châssis, engrenée sur lesdits premier et deuxième pignons et qui est munie d'une fente (36) qui lui est sensiblement perpendiculaire et dans laquelle s'engage un maneton de commande (35) monté excentré sur un pignon moteur à roue libre (34) muni d'un cliquet anti-retour (39), ledit pignon moteur (34) apportant seulement un appoint d'énergie pour chaque prise de vue, cette combinaison de caractéristiques permettant ainsi d'établir pendant le fonctionnement ou l'arrêt du dispositif une fente d'exposition de largeur instantanée prédéterminée.

2. Obturateur photographique selon la revendication 1, caractérisé en ce que lesdits moyens de tension sont constitués, en ce qui concerne le premier rideau (47), par un troisième rouleau d'entraînement (49) supporté à rotation par le châssis, entraîné lui-même en rotation à partir dudit deuxième pignon (11, 51) et en ce qui concerne le deuxième rideau (48) par un quatrième rouleau (52) supporté à rotation par le châssis, proche dudit mécanisme moteur, et entraîné par un ruban tendeur (53) qui est enroulé autour des rouleaux (9, 52) support du deuxième rideau (48) avec des sens d'enroulement opposés à ceux du deuxième rideau, et que lesdits premier et deuxième rideaux (47, 48) comportent chacun une ouverture rectangulaire (57, 58) pouvant découvrir entièrement le format et dont l'un des petits côtés (55, 56) constitue respectivement un bord de la fente d'exposition (5).

3. Obturateur photographique selon la revendication 2, caractérisé en ce qu'un bord de la fente d'exposition est constitué par le bord (56) de l'ouverture (58) du deuxième rideau (48) le plus proche dudit mécanisme moteur, l'autre bord de la fente étant constitué par le bord (55) de l'ouverture (57) du premier rideau (47) situé du côté le plus éloigné dudit mécanisme moteur, de façon telle que lesdits bords puissent se chevaucher pour une plage de valeurs de calage angulaire déterminées par ledit dispositif de calage angulaire (59).

4. Obturateur photographique selon l'une des revendications 1 à 3, caractérisé en ce que ledit dispositif de calage angulaire (15; 59) est constitué par l'association d'un premier et d'un deuxième tambour concentriques (16, 17; 60, 61) supportés à rotation par ledit châssis, d'une tige (23) et d'au moins un doigt (25), lesdits tambours étant montés de façon concentrique et étant solidaires dudit deuxième pignon (11) en ce qui concerne le premier tambour (16; 60) et dudit troisième pignon (14) en ce qui concerne le deuxième tambour (17; 61), ladite tige (23) s'étendant le long de l'axe desdits deuxième et troisième pignons (11, 14) à travers lesquels elle coulisse librement, ledit doigt (25) étant monté à rotation sans possibilité de translation sur ladite tige à l'intérieur desdits tambours et étant engagé dans une première et une deuxième rampes (18, 19; 62, 63) pratiquées dans la paroi du premier et du deuxième tambours respectivement avec des courbures qui s'opposent, le calage angulaire entre lesdits deuxième et troisième pignons (11, 14) étant fonction de la position en translation de ladite tige (23) sur son axe.

5. Obturateur photographique selon la revendication 4, caractérisé en ce que le réglage de la position en translation de la tige (23) est réalisé par vissage (26), ladite tige étant à cet effet immobilisée en rotation par coulissement longitudinal d'un doigt (83) qui lui est solidaire dans une partie du châssis et comportant une extrémité filetée (81) qui se visse dans un boulon (82) monté à rotation sur le châssis, ledit boulon pouvant être manoeuvré en rotation.

6. Obturateur photographique selon la revendication 4 ou 5, caractérisé en ce qu'il comporte un dispositif de recopie de la largeur de fente constitué à une extrémité de ladite tige par un doigt (83) solidaire de la tige, un secteur de cylindre (86) muni d'une rampe courbe (87) et un potentiomètre à curseur rotatif (91), ledit doigt traversant ladite rampe, et ledit secteur de tambour étant solidaire d'un quatrième pignon (89) conçu pour entraîner en rotation ledit curseur rotatif.

7. Obturateur photographique selon l'une des revendications 4, 5 ou 6, caractérisé en ce que ledit deuxième tambour (61) est plus long que ledit premier tambour (60) et que la rampe (62) qu'il comporte s'étend, au-delà dudit premier tambour selon une génératrice du cylindre constitué par le deuxième tambour de façon telle que pour une plage de valeurs d'enfoncement élevées de ladite tige (23) à l'intérieur des tambours ledit doigt soit dégagé de ladite première rampe de façon à désaccoupler les deux tambours.

8. Obturateur photographique selon la revendication 7, caractérisé en ce qu'il comporte des moyens d'immobilisation du deuxième tambour, constitués par un frein (76, 77) solidaire de la tige respectivement du doigt à l'intérieur dudit deuxième tambour, destiné à rentrer en contact avec la bague extérieure (92), respectivement intérieure du palier support (73) dudit deuxième tambour pour l'enfoncement maximal de la tige à l'intérieur des tambours.

9. Obturateur photographique selon l'une quelconque des revendications 1 à 8, caractérisé en ce que lesdits premier et deuxième rideaux (1, 2) sont constitués par une feuille en inox d'une épaisseur de l'ordre de quelques dizaines de micrometres.

10. Obturateur photographique selon l'une quelconque des revendications 1 à 8, caractérisé en ce que lesdits premier et deuxième rideaux (1, 2) sont constitués par une feuille en titane d'une épaisseur de l'ordre de quelques dizaines de micrometres.

## Patentansprüche

1. Photographischer Schlitzverschluss mit einem ersten und einem zweiten Vorhang (1, 2; 47, 48), die sich in flachen parallelen nahe beieinander liegenden Ebenen erstrecken, und die je teilweise auf mindenstens einer Antriebsrolle (6, 9) aufgewickelt sind, die auf einer Seite bzw. auf der anderen Seite des Belichtungsfensters liegt und die auf einem Gestell (71) drebar unterstrützt wird, wobei diese Verhänge je mindestens einen Rand (3, 4; 44, 45; 55, 56) aufweisen, der sich derart über das Belichtungsfenster bewegen kann, dass zwischen den genannten Rändern ein Belichtungsschlitz (5) gebildet wird, wobei die Rolle (6) des ersten Vorhangs (1; 47) unmittelbar von einem ersten Antriebsrad (7) angetrieben wird, das formschlüssig mit einem Motormechanismus (31) gekuppelt ist, der auf dem genannten Gestell befestigt ist, wobei der genannte Verschluss ausserdem einerseits ein zweites Antriebsrad (11) aufweist, das von dem genannten Gestell drehend unterstützt wird gegenüber einem ersten Antriebsrad (7) auf der anderen Seite des Belichtungsfensters und mit dem letztgenannten drehend gekuppelt ist und andererseits ein drittes Antriebsrad (14) koaxial zu dem zweiten Antriebsrad (11), das mittels einer Winkellagenvorrichtung (15; 59) von dem genannten zweiten Antriebsrad angetrieben wird, wobei diese Vorrichtung unabhängig ist von der simultanen Drehbewegung des zweiten und dritten Antriebsrades, zur Gewährleistung der relativen Winkelverschiebung des zweiten und dritten Antriebsrades und zwar derart, dass die Grösse des Belichtungsschlitzes sich auf entsprechende Weise ändert, wobei das genannte dritte Antriebsrad (14) das genannte Antriebsrad (9) des genannten zweiten Vorhangs (2; 48) mit derselben Drehgeschwindigkeit antreibt wie das Antriebsrad (6) des ersten Vorhangs (1; 47), und an dritter Stelle Spannmittel (27; 42, 43, 46; 48, 49), die jeden Vorhang in der betreffenden Ebene halten, wobei der genannte Antriebsmechanismus aus einer Schraubenfeder mit nicht aneinander anliegenden Windungen besteht, die in den zwei Drehrichtungen torsionsbelastet sein kann und die mit Energierückgewinnung in der einen oder in·der anderen Bewegungsrichtung der Vorhänge arbeitet wegen der Tatsache, dass eine Zahnstange (33) vorgesehen ist, die von Rollen unterstützt wird, die zum Drehen auf dem Gestell vorgesehen sind, wobei diese Zahnstange mit dem ersten und dem zweiten Antriebsrad im Eingriff ist und mit einem Schlitz (36) versehen ist, der zu der Zahnstange nahezu senkrecht steht und mit dem ein Steuerzapfen (35) zusammenarbeitet, der exzentrisch auf einem Freilaufantriebsrad (34) mit einer Sperrklinke (39) angeordnet ist, wobei das Antriebsrad (34) nur eine Energiereserve für jede Aufnahme bildet, wobei diese Kombination der Eigenschaften es ermöglicht im Betrieb oder in dem Ruhezustand der Vorrichtung einen Belichtungsschlitz einer vorbestimmten Grösse zu bilden.

2. Photographischer Schlitzverschluss nach Anspruch 1, dadurch gekennzeichnet, dass die genannten Spannmittel, was den ersten Vorhang (47) anbelangt, aus einem dritten Antriebsrad (49) bestehen, das drehbar auf dem Gestell unterstützt ist und das selber durch das genannte zweite Antriebsrad (11, 51) in Drehung versetzt wird und was den zweiten Vorhang (48) anbelangt, aus einer vierten Rolle (52) besteht, das von dem Gestell in Drehung versetzt wird in der Nähe das Antriebsmechanismus und das mittels eines Spannbandes (53) angetrieben wird, das um die Rollen (9, 52) gewickelt ist, die als Träger für den zweiten Vorhang (48) wirksam ist und zwar in einem Wickelsinn, der dem des zweiten Vorhanges entgegengesetzt ist und dass der erste und zweite Vorhang (47, 48) je eine rechtwinklige Öffnung (57, 58) aufweisen, die das Format völlig freigeben können und wobei eine der kurzen Seiten (55, 56) je einen Rand des Belichtungsschlitzes (5) bildet.

3. Photographischer Schlitzverschluss nach Anspruch 2, dadurch gekennzeichnet, dass ein Rand des Belichtungsschlitzes durch denjenigen Rand (56) der Öffnung (58) des zweiten Vorhanges (48) gebildet wird, der dem Antriebsmechanismus am nächsten liegt, wobei der andere Rand des Schlitzes durch denjenigen Rand (55) der Öffnung (57) des ersten Vorhanges (47) gebildet wird, der am weitesten von dem Antriebsmechanismus liegt und zwar derart, dass die genannten Ränder einander überlappen können zum Erhalten einer Reihe von Winkelverschiebungswerten, die von der Winkelverschiebungsvorrichtung (59) bestimmt werden.

4. Photographischer Schlitzverschluss nach einem der Ansprüche 1 bis 3, dadurch gekennzeichnet, dass die Winkelverschiebungsvorrichtung (15; 59) aus einer Kombination einer ersten und einer zweiten konzentrischen Trommel (16, 17; 60, 61) besteht, die drehbar auf dem genannten Gestell angeordnet sind, sowie aus einer Spindel (23) und mindestens einem Zapfen (25), wobei die genannten Trommeln konzentrisch angeordnet und, was die erste Trommel (16; 60) anbelangt, mit dem genannten zweiten Antriebsrad (11) und was die zweite Trommel (17; 61) anbelangt, mit dem genannten dritten Antriebsrad (14) fest verbunden sind, wobei die Spindel (23) sich längs der Achse der genannten zweiten und dritten Antriebsräder (11, 14) erstreckt, während sie quer zu denselben frei läuft, wobei der genannte Zapfen (25) drehbar angeordnet ist ohne die Möglichkeit einer Translationsbewegung auf der genannten Spindel zum Innern der genannten Trommeln und mit einem ersten und einem zweiten gekrümmten Schlitz (18, 19; 62, 63) in der Wand der ersten und zweiten Trommel zusammenarbeitet, wobei die Schlitze entgegengesetzt gekrümmt sind, wobei die Winkelverschiebung zwischen dem genannten zweiten und dritten Antriebsrad (11, 14) eine Funktion der Translationslage der genannten Spindel (23) längs ihrer Achse ist.

5. Photographischer Schlitzverschluss nach Anspruch 4, dadurch gekennzeichnet, dass die Translationslage der Spindel (23) durch eine schraubenförmige Bewegung (26) geregelt wird, zu welchem Zweck die genannte Spindel gegen Drehung gesichert is durch eine Längsverschiebung eines Zapfens (83), der ortsfest mit der genannten Spindel verbunden ist in einem Teil des Gestells, wobei die Spindel einen Gewindeendteil (81) aufweist, der sich in einer Gewindubuchse (82) dreht, die drehbar auf dem Gestell angeordnet ist, wobei die genannte Gewindebuchse in Drehung versetzt werden kann.

6. Photographischer Schlitzverschluss nach Anspruch 4 oder 5, dadurch gekennzeichnet, dass er einen Schlitzgrössendetektor aufweist, der aus einer zweiten Winkelverschiebungsvorrichtung besteht, die aus einem Zapfen (83) an einem Ende der genannten Spindel besteht, wobei der Zapfen ortsfest mit der Spindel verbunden ist, weiterhin einen Zylindersektor (86) mit einem gekrümmten Schlitzt (87) und ein Potentiometer mit einem Drehschleifer (91), wobei der genannte Zapfen mit dem genannten Schlitz zusammenarbeitet und wobei der geannte Trommelsektor mit einem vierten Antriebsrad (89) ortsfest verbunden ist, das den genannten Drehschleifer in Drehung versetzen kann.

7. Photographischer Schlitzverschluss nach einem der Ansprüche 4, 5 oder 6, dadurch gekennzeichnet, dass die genannte zweite Trommel (61) länger ist als die genannte erste Trommel (60) und dass der Schlitz (62) der zweiten Trommel sich weiter erstreckt als die erste Trommel und zwar entsprechend einer Mantellinie des Zylinders, der durch die zweite Trommel gebildet wird und zwar derart, dass für eine Reihe von Werten übereinstimmend mit einem Einsinken der Spindel (23) in die Trommels, der genannte Zapfen aus dem ersten Schlitz ausgekuppelt ist, so dass die zwei Trommeln nicht miteinander gekuppelt sind.

8. Photographischer Schlitzverschluss nach Anspruch 7, dadurch gekennzeichnet, dass er Mittel aufweist zum Festhalten der zweiten Trommel, wobei diese Mittel aus einer Bremse (76, 77) bestehen, die mit der Spindel bzw. dem Zapfen innerhalb der zweiten Trommel ortsfest verbunden ist, wobei diese Bremse mit dem Aussenring (92) bzw. dem Innenring des Lagers (73) der genannten zweiten Trommel in Kontakt gebracht werden kann zum maximalen Eindringen der Spindel in die Trommeln.

9. Photographischer Schlitzverschluss nach einem der Ansprüche 1 bis 8, dadurch gekennzeichnet, dass der genannte erste und zweite Vorhang (1, 2) aus einem Blatt aus rostfreiem Stahlblech bestehen mit einer Dicke in der Grössenordnung von einigen zehn Mikronen.

10. Photographischer Schlitzverschluss nach einem der Ansprüche 1 bis 8, dadurch gekennzeichnet, dass der genannte erste und zweite Vorhang (1, 2) aus einem Titanblatt bestehen mit einer Dicke in der Grössenordnung von eingen zehn Mikronen.

**Claims**

1. A photographic shutter with roller blinds, comprising a first and a second blind (1, 2; 47, 48) which extend in parallel planes close to each other and which are each partly wound on at least one drive roller (6, 9) which is situated on one side and on the other side of the exposure window respectively and which is mounted for rotation on a chassis (71), which blinds each comprise at least one edge (3, 4; 44, 45; 55, 56) which is movable across the exposure window in such a way that an exposure slit (5) is formed between said edges, the roller (6) of the first blind (1; 47) being driven directly by a first pinion (7) which is rotatably coupled to a drive mechanism (31) mounted on said chassis, said blinds being tensioned permanently, which shutter further comprises a second pinion (11) which is mounted for rotation on said chassis, which second pinion is arranged opposite the first pinion (7) on the other side of the exposure window and is rotatably coupled to said first pinion, a third pinion (14) which is coaxial with the second pinion (11) and which is driven by said second pinion via an angular-positioning device (15; 59) which is independent of the simultaneous rotary movements of the second and the third pinion, which device serves to provide the relative sugular displacement of the third and the fourth pinion so as to modify the width of the exposure slit accordingly, said third pinion (14) driving said drive roller (9) of said second blind (2; 48) with the same speed of rotation as the drive roller (6) of the first blind (1; 47), and, thirdly, tension means (27; 42, 43, 46; 48, 49) which maintain each blind in its respective plane, said drive mechanism comprising a helical spring (31) with non-adjoining turns, which spring may be loaded in torsion in both directions of rotation and provides energy recovery in one of the two directions of translation of the blinds because it comprises a gear rack (33) which is supported by rollers mounted for rotation on the chassis, which gear rack meshes with said first and second pinions and is formed with a slot (36) which extends substantially perpendicularly to said rack and which is engaged by a control pin (35) which is mounted eccentrically on a freewheel motor pinion (34) provided with an anti-return pawl (39), said motor pinion (34) providing only additional energy for each exposure, which combination of characteristic features thus enables an exposure slit of predetermined instantaneous width to be obtained during operation or stoppage of the device.

2. A photographic shutter as claimed in Claim 1, characterized in that said tension means comprise, for the first blind (47), a third roller (49) which is mounted for rotation on the chassis and which is rotated by said second pinion (11, 51) and, for the second blind (48), a fourth roller (52) which is mounted for rotation on the chassis near said drive mechanism and which is driven by a tension band (53) which is wound around the rollers (9, 52) carrying the second blind (48) with winding directions opposite to those of the second blind, and said first and second blinds (47, 48) each have a rectangular aperture (57, 58) which is capable of exposing the entire format, one of the small sides (55, 56) of said aperture forming an edge of the exposure slit (5).

3. A photographic shutter as claimed in Claim 2, characterized in that one edge of the exposure slit is formed by the edge (56) of the aperture (58) of the second blind (48) nearest said drive mechanism, the other edge of the slit being formed by the edge (55) of the aperture (57) of the first blind (47) which is situated at the side which is remote from said drive mechanism, in such a way that said edges can overlap each other to obtain a range of angular displacement values dictated by said angular-positioning device (59).

4. A photographic shutter as claimed in any one of the Claims 1 to 3, characterized in that said angular-positioning device (15; 59) comprises a combination of a first and a second concentric drum (16, 17; 60, 61) which drums are mounted for rotation on said chassis, a spindle (23), and at least one limb (25), which drums are arranged concentrically, the first drum (16; 60) being rigidly connected to said second pinion (11) and said second drum (17; 61) being rigidly connected to said third pinion (14), said spindle being coaxial with said second and third pinions (11, 14) in which it can slide freely, said limb (25) being mounted for rotation so that it cannot be translated on said spindle inside said drums and engaging a first and a second curved slot (18, 19; 62, 63) formed in the walls of the first and the second drum respectively, which slots are curved oppositely, the angular displacement between said second and third pinions (11, 14) being a function of the translational position of said spindle (23) along its axis.

5. A phtotographic shutter as claimed in Claim 4, characterized in that the translational position of the spindle (23) is adjusted by screw-thread means (26), rotation of said spindle being inhibited by the axial sliding movement of a limb (83) which is rigidly connected to said spindle in a part of the chassis, which spindle comprises a threaded end-portion (81) which engages a rotatable threaded bush (82) which is mounted for rotation on the chassis.

6. A photographic shutter as claimed in Claim 4 or 5, characterized in that it comprises a slit-width detection mechanism, which mechanism comprises a second angular-positioning device comprising a limb (83) on one end of said spindle to which it is rigidly connected, a cylindrical sector (86) provided with a curved slot (87), and a potentiometer having a rotary wiper (91), said limb engaging in said slot, and said cylindrical sector being rigidly connected to a fourth pinion (89) which is adapted to rotate said rotary wiper.

7. A photographic shutter as claimed in any one of the Claims 4, 5 or 6, characterized in that said second drum (61) is longer than said first drum (60) and its slot (62) extends further than said first drum in accordance with a generatrix of the cylinder formed by the second drum, in such a way that for a range of values corresponding to a deep insertion of said spindle (23) in the drums said limb is disengaged from said first slot so that the two drums are not coupled to each other.

8. A photographic shutter as claimed in Claim 7, characterized in that it comprises means for immobilizing the second drum, which means comprise a brake (76, 77) which is rigidly connected to the spindle or to the limb inside said second drum, which brake can be brought into contact with the outer ring (92) or with the inner ring of the second-drum bearing (73) respectively for pressing the spindle into the drums to the maximum extent.

9. A photographic shutter as claimed in any one of the Claims 1 to 8, characterized in that said first and second blinds (1, 2) are formed by 2 stainless-steel sheet having a thickness of the order of some tens of micrometres.

10. A photographic shutter as claimed in any one of the Claims 1 to 8, characterized in that said first and second blinds (1, 2) are formed by 2 titanium sheet having a thickness of the order of some tens of micrometres.

0 099 154

FIG.1

FIG.2

0 099 154

FIG.3

FIG. 4

FIG.5